# EUROPÄISCHE PATENTSCHRIFT

(11) **EP 2 427 279 B1**
(45) Veröffentlichungstag und Bekanntmachung des Hinweises auf die Patenterteilung: **04.07.2018**
(21) Anmeldenummer: 10718893.0
(22) Anmeldetag: 05.05.2010
(51) Int. Cl.: B08B 5/02, B08B 3/02, B08B 1/00, B05B 13/04, B25J 5/02, B25J 9/00

(54) **REINIGUNGSANLAGE FÜR KRAFTFAHRZEUGKAROSSERIEBAUTEILE UND BETRIEBSVERFAHREN**
CLEANING SYSTEM FOR MOTOR VEHICLE BODY COMPONENTS AND OPERATING METHOD
INSTALLATION DE LAVAGE DE PIÈCES DE CARROSSERIE DE VÉHICULE À MOTEUR ET PROCÉDÉ DE FONCTIONNEMENT

(30) Priorität: 06.05.2009 DE 102009020114
(43) Veröffentlichungstag der Anmeldung: 14.03.2012
(73) Patentinhaber: Dürr Systems AG, 74321 Bietigheim-Bissingen (DE)
(72) Erfinder: VERGARA, Salvador, 74336 Brackenheim-Hausen (DE); MAI, Thomas, 70806 Kornwestheim (DE); SPRENGER, Jürgen, 75446 Wiernsheim (DE)
(74) Vertreter: Beier, Ralph
(86) Internationale Anmeldenummer: PCT/EP2010/002761
(87) Internationale Veröffentlichungsnummer: WO 2010/127848

(56) Entgegenhaltungen:
- WO-A1-93/22067
- DE-A1- 10 360 649
- DE-A1- 19 730 886
- DE-A1-102004 058 275
- DE-A1-102006 007 962
- DE-U1-202007 008 852
- GB-A- 2 261 644

## Beschreibung

Die Erfindung betrifft eine Reinigungsanlage zur Reinigung von Bauteilen, insbesondere zur Reinigung von Kraftfahrzeugkarosseriebauteilen vor einer Lackierung der Kraftfahrzeugkarosseriebauteile in einer Lackieranlage.

In modernen Lackieranlagen zur Lackierung von Kraftfahrzeugkarosseriebauteilen werden die Kraftfahrzeugkarosseriebauteile vor der eigentlichen Lackierung innen und außen gereinigt, da das Lackierergebnis durch eine Verschmutzung der Kraftfahrzeugkarosseriebauteile beispielsweise durch Staub beeinträchtigt werden könnte.

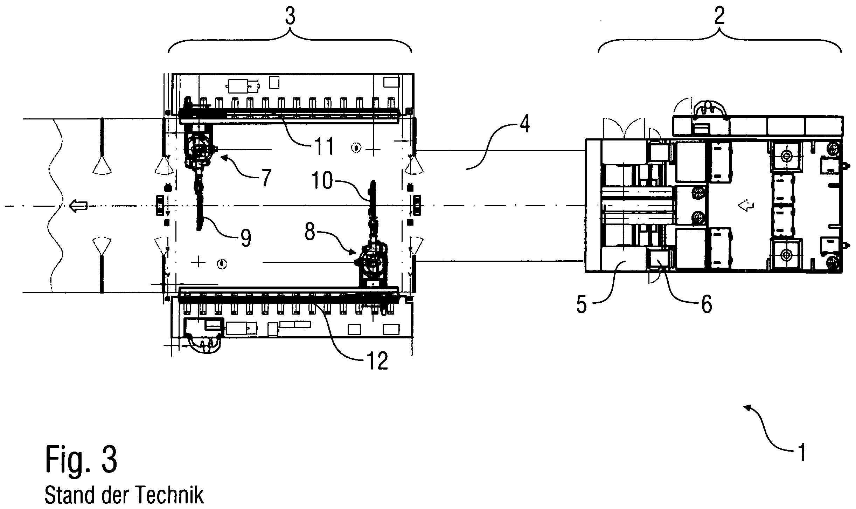

Figur 3 zeigt eine herkömmliche Reinigungsanlage 1, die in einer Lackieranlage zur Lackierung von Kraftfahrzeugkarosseriebauteilen eingesetzt werden kann. Die Reinigungsanlage 1 umfasst zwei getrennte Reinigungsstationen 2, 3 auf, die jeweils eine Reinigungskabine aufweisen und entlang einem Förderweg 4 hintereinander angeordnet sind, wobei die zu reinigenden Kraftfahrzeugkarosseriebauteile entlang dem Förderweg 4 durch die Lackieranlage transportiert werden.

Die Reinigungsstation 2 dient zur Innenreinigung der Kraftfahrzeugkarosseriebauteile und weist hierzu eine Reinigungseinrichtung des Typs EcoPaint™ Blow-Off auf, die von der Anmelderin vertrieben wird und aus dem Stand der Technik bekannt ist. Die Reinigungseinrichtung der Reinigungsstation 2 weist zur Innenreinigung der Kraftfahrzeugkarosseriebauteile eine sogenannte Dachstation 5 mit abwärts gerichteten Luftdüsen und eine Seitenstation 6 mit seitlich ausgerichteten Luftdüsen auf, so dass die zu reinigenden Kraftfahrzeugkarosseriebauteile großflächig mit Luft beströmt und dadurch gereinigt werden.

Die Reinigungsstation 3 dient dagegen zur Außenreinigung der Kraftfahrzeugkarosseriebauteile und weist hierzu beiderseits des Förderwegs 4 jeweils einen Reinigungsroboter 7, 8 auf, wobei die beiden Reinigungsroboter 7, 8 als Reinigungswerkzeug jeweils eine Schwertbürste 9, 10 führen. Weiterhin ist zu erwähnen, dass die Reinigungsroboter 7, 8 an jeweils einer linearen Verfahrachse 11, 12 parallel zu dem Förderweg 4 verfahrbar sind. Die Verfahrachsen 11 oder 12 entsprechen hierbei dem Typ EcoRail™ V, der von der Anmelderin vertrieben wird, so dass sich die Reinigungsroboter 7, 8 jeweils seitlich neben der zugehörigen Verfahrachse 11, 12 befinden.

Ein Nachteil der vorstehend beschriebenen herkömmlichen Reinigungsanlage besteht in der großen Baulänge in Förderrichtung, da die beiden Reinigungsstationen 2, 3 in Förderrichtung hintereinander angeordnet sind.

Ein weiterer Nachteil der vorstehend beschriebenen herkömmlichen Reinigungsanlage 1 besteht in der relativ großen Kabinenbreite der Reinigungsstation 3 für die Außenreinigung.

Ferner realisiert die herkömmliche Reinigungsanlage 1 kein einheitliches Maschinenkonzept, da die Außenreinigung einerseits und die Innenreinigung andererseits durch unterschiedliche Maschinentypen erfolgt. So wird zur Innenreinigung eine Maschine mit Gebläseanordnung des Typs EcoPaint™ Blow-Off eingesetzt, wohingegen zur Außenreinigung Reinigungsroboter verwendet werden.

Aus WO 93/22067 A1 ist ebenfalls eine Reinigungsanlage für Kraftfahrzeugkarosseriebauteile bekannt, wobei eine Innenreinigung und eine Außenreinigung der Kraftfahrzeugkarosseriebauteile erfolgt. Die Innenreinigung und die Außenreinigung erfolgt hierbei jedoch ebenfalls in getrennten Reinigungsstationen, die entlang dem Förderweg hintereinander angeordnet sind. Auch diese bekannte Reinigungsanlage weist also eine relativ große Baulänge auf.

Ferner ist zum Stand der Technik hinzuweisen auf DE 197 30 886 A1, US 2004/0098162 A1, DE 103 60 649 A1, DE 101 58 129 A1 und DE 20 2007 008 852 A1.

WO 93/22067 A1 offenbart eine Reinigungsanlage gemäß dem Oberbegriff der unabhängigen Patentansprüche. Hierbei erfolgen die Innenreinigung und Außenreinigung jedoch in getrennten, entlang dem Förderweg hintereinander angeordneten Reinigungsstationen.

Schließlich ist zum Stand der Technik noch hinzuweisen auf DE 10 2004 058 275 A1, DE 10 2006 007 962 A1, GB 2 261 644 A, DE 20 2007 008 852 U1 und DE 197 30 886 A1.

Der Erfindung liegt deshalb die Aufgabe zugrunde, die vorstehend beschriebene herkömmliche Reinigungsanlage entsprechend zu verbessern, wobei die Baulänge der gesamten Reinigungsanlage entlang dem Förderweg verringert werden soll.

Diese Aufgabe wird durch eine erfindungsgemäße Reinigungsanlage gemäß dem Hauptanspruch gelöst. Darüber hinaus wird diese Aufgabe auch durch ein erfindungsgemäßes Betriebsverfahren gemäß dem Nebenanspruch gelöst.

Die Erfindung umfasst die allgemeine technische Lehre, die Innenreinigung und die Außenreinigung nicht - wie beim Stand der Technik - in getrennten Reinigungsstationen durchzuführen, sondern in derselben Reinigungsstation.

Der im Rahmen der Erfindung verwendete Begriff einer Reinigungsstation stellt vorzugsweise auf eine im Wesentlichen geschlossene Kabine im engeren Sinne ab, die bis auf Einlauf und Auslauf der Reinigungsstation im Wesentlichen ganzseitig durch Kabinenwände begrenzt ist. Der Begriff einer Reinigungsstation umfasst jedoch im Rahmen der Erfindung auch Reinigungsstationen, die nicht vollständig durch Wände begrenzt ist. Darüber hinaus besteht im Rahmen der Erfindung auch die Möglichkeit, dass innerhalb der Reinigungsstation neben der Innenreinigung und der Außenreinigung auch weitere Bearbeitungsschritte erfolgen.

Zur Realisierung des vorstehend skizzierten allgemeinen Erfindungsgedanken ist in ein und derselben Reinigungsstation sowohl eine Innenreinigungseinrichtung als auch eine Außenreinigungseinrichtung angeordnet, wobei die Innenreinigungseinrichtung dazu dient, den Innenraum der Kraftfahrzeugkarosseriebauteile zu reinigen, während die Außenreinigungseinrichtung dazu dient, die Außenhaut der Kraftfahrzeugkarosseriebauteile zu reinigen. Gemäß der Erfindung weist die Innenreinigungseinrichtung mindestens einen mehrachsigen Roboter auf, der ein Reinigungswerkzeug zur Innenreinigung führt. Dies bietet den Vorteil, dass das Reinigungswerkzeug auch in den Innenraum der Kraftfahrzeugkarosseriebauteile eingeführt werden kann, beispielsweise durch die Fenster. Der im Rahmen der Erfindung verwendete Begriff eines Roboters stellt vorzugsweise auf einen mehrachsigen Roboter mit einer seriellen oder parallelen Kinematik ab, der das Reinigungswerkzeug hochbeweglich führt. Es ist jedoch, nicht erfindungsgemäß, auch möglich, dass die Innenreinigungseinrichtung eine sogenannte Dachmaschine und/oder eine sogenannte Seitenmaschine aufweist. Gemäß der Erfindung weist auch die Außenreinigungseinrichtung mindestens einen mehrachsigen Roboter auf, der ein Reinigungswerkzeug zur Außenreinigung führt. Auch hierbei ist zu erwähnen, dass es sich bei dem Roboter zur Außenreinigung vorzugsweise um einen mehrachsigen Roboter mit einer seriellen oder parallelen Kinematik handelt. Es besteht jedoch, nicht erfindungsgemäß, alternativ auch die Möglichkeit, dass die Außenreinigungseinrichtung eine Dachmaschine und/oder eine Seitenmaschine aufweist, um die Außenreinigung durchzuführen.

Weiterhin ist bei dem bevorzugten Ausführungsbeispiel der Erfindung mindestens eine Verfahrachse vorgesehen, entlang der der Roboter für die Innenreinigung und/oder der Roboter für die Außenreinigung verfahrbar ist. Die Verfahrachse verläuft vorzugsweise linear, horizontal und/oder parallel zu dem Förderweg der Kraftfahrzeugkarosseriebauteile, wobei die Verfahrachse vorzugsweise einen Nutzhub aufweist, der größer ist als 2m, 3m, 4m oder 5m. Dies bedeutet, dass der Roboter einen Bewegungsspielraum entlang der Verfahrachse aufweist, der auf den Nutzhub der Verfahrachse beschränkt ist.

Hierbei besteht die Möglichkeit, dass der Roboter für die Innenreinigung an derselben Verfahrachse verfahrbar ist wie der Roboter zur Außenreinigung. Alternativ besteht jedoch auch die Möglichkeit, dass die Roboter zur Innenreinigung einerseits und die Roboter zur Außenreinigung andererseits an getrennten Verfahrachsen verfahrbar sind. In diesen beiden Varianten besteht im Rahmen der Erfindung die Möglichkeit, dass sich die verschiedenen Roboter entlang der Verfahrachse passieren können. Derartige Verfahrachsen sind beispielsweise aus EP 1 609 532 Al bekannt.

In dem bevorzugten Ausführungsbeispiel der Erfindung wird nicht die herkömmliche Verfahrachse des Typs EcoRail™ V verwendet, die eingangs zum Stand der Technik beschrieben wurde und von der Anmelderin vertrieben wird. Stattdessen wird im Rahmen der Erfindung vorzugsweise eine Verfahrachse des Typs EcoRail™ H verwendet, die ebenfalls von der Anmelderin vertrieben wird. Diese Verfahrachse weist zwei horizontal nebeneinander verlaufende Führungsschienen auf, auf denen die Roboter verfahrbar sind, wobei sich die Roboter über den Führungsschienen und im Wesentlichen mittig zwischen den Führungsschienen befinden, wohingegen sich die Roboter bei der Verfahrachse des Typs EcoRail™ V seitlich neben der Verfahrachse befinden. Die vorzugsweise verwendete Verfahrachse des Typs EcoRail™ H bietet also gegenüber der herkömmlichen Verfahrachse des Typs EcoRail™ V den Vorteil, dass die Kabinenbreite verringert werden kann.

Ferner ist zu erwähnen, dass bei dem bevorzugten Ausführungsbeispiel der Erfindung auf beiden Seiten des Förderwegs jeweils mindestens eine Verfahrachse angeordnet, wobei an jeder der beiden Verfahrachsen jeweils mindestens ein Roboter für die Außenreinigung und jeweils mindestens ein Roboter für die Innenreinigung verfahrbar geführt ist.

Weiterhin ist zu erwähnen, dass die Roboter für die Innenreinigung in der Reinigungsstation vorzugsweise einlaufseitig angeordnet sind, während sich die Roboter für die Außenreinigung in der Reinigungsstation vorzugsweise auslaufseitig befinden. Eine derartige Anordnung der Roboter ist sinnvoll, weil in der Regel zuerst die Innenreinigung und dann die Außenreinigung der Kraftfahrzeugkarosseriebauteile erfolgt.

Bei dem bevorzugten Ausführungsbeispiel der Erfindung weisen die Verfahrachsen in der Regel einen begrenzten Nutzhub auf, wobei der Bewegungsspielraum der Roboter auf den Nutzhub der jeweiligen Verfahrachse beschränkt ist. In dem bevorzugten Ausführungsbeispiel ist vorgesehen, dass der Nutzhub der Roboter für die Innenreinigung gegenüber dem Nutzhub der Roboter für die Außenreinigung entlang dem Förderweg versetzt ist. Vorzugsweise ist der Nutzhub der Roboter für die Außenreinigung gegenüber dem Nutzhub der Roboter für die Innenreinigung in Förderrichtung versetzt. Dies bedeutet, dass die Roboter für die Innenreinigung nicht ganz bis zur Auslaufseite der Reinigungsstation bewegt werden können, wohingegen die Roboter für die Außenreinigung nicht ganz bis zur Einlaufseite der Reinigungsstation bewegt werden können.

In dem bevorzugten Ausführungsbeispiel weisen die Roboter für die Innenreinigung deshalb eine bestimmte Parkposition auf, die außerhalb des Nutzhubs der Roboter für die Außenreinigung liegt. Dies bietet den Vorteil, dass zwischen den Robotern für die Innenreinigung einerseits und den Robotern für die Außenreinigung andererseits keine störende Wechselwirkung (z.B. Roboterkollision) auftreten kann, wenn sich die Roboter für die Innenreinigung in ihrer Parkposition befinden, da sie dort außerhalb der Reichweite der Roboter für die Außenreinigung liegen. In gleicher Weise haben vorzugsweise auch die Roboter für die Außenreinigung eine bestimmte Parkposition, die außerhalb des Nutzhubs der Roboter für die Innenreinigung liegt. Auch dies bietet den Vorteil, dass zwischen den Robotern für die Innenreinigung einerseits und den Robotern für die Außenreinigung andererseits keine störende Wechselwirkung (z.B. Roboterkollision) auftreten kann, wenn sich die Roboter für die Außenreinigung in ihrer Parkposition befinden.

Hierbei ist zu erwähnen, dass sich die Parkposition der Roboter für die Innenreinigung vorzugsweise an der Einlaufseite der Reinigungsstation befindet, während sich die Parkposition der Roboter für die Außenreinigung vorzugsweise an der Auslaufseite der Reinigungsstation befindet. Die Parkpositionen befinden sich also vorzugsweise innerhalb des einlaufseitigen bzw. auslaufseitigen Viertels oder Fünftels der Reinigungsstation.

Ferner ist zu erwähnen, dass die erfindungsgemäße Reinigungsanlage vorzugsweise eine Robotersteuerung aufweist, die sowohl die Roboter für die Innenreinigung als auch die Roboter für die Außenreinigung steuert, wobei die Steuerung der Roboter für die Innenreinigung mit der Steuerung der Roboter für die Außenreinigung so koordiniert wird, dass keine störenden Wechselwirkungen (z.B. Roboterkollisionen) auftreten.

Die Roboter für die Innenreinigung können vielfältige verschiedene Reinigungswerkzeuge verwenden, um die Innenreinigung durchzuführen. Beispielsweise kann als Reinigungswerkzeug für die Innreinigung eine Saugdüse eingesetzt werden, insbesondere an einer Saugpistole. Ein weiteres Beispiel eines möglichen Reinigungswerkzeugs für die Innenreinigung ist ein sogenannter Blas-Sauger, der die zu reinigende Bauteiloberfläche sowohl anblasen als auch absaugen kann. Ferner besteht im Rahmen der Erfindung die Möglichkeit, als Reinigungswerkzeug für die Innenreinigung einen Aerosol-Sauger einzusetzen. Die Erfindung ist jedoch hinsichtlich des Reinigungswerkzeugs für die Innenreinigung nicht auf die vorstehend beschriebenen Typen von Reinigungswerkzeugen beschränkt, sondern grundsätzlich auch mit anderen Reinigungswerkzeugen realisierbar.

Darüber hinaus können auch für die Außenreinigung verschiedenste Reinigungswerkzeuge eingesetzt werden, wie beispielsweise die vorstehend für die Innenreinigung erwähnten Reinigungswerkzeuge. Vorzugsweise werden jedoch für die Außenreinigung sogenannte Schwertbürsten eingesetzt, die beispielsweise aus DE 103 29 499 B3 bekannt sind. Darüber hinaus werden derartige Schwertbürsten auch von der deutschen Firma Wandres GmbH Micro-Cleaning vertrieben, so dass auf eine detaillierte Beschreibung der herkömmlichen Schwertbürsten verzichtet werden kann. Ferner besteht auch die Möglichkeit, als Reinigungswerkzeug für die Außenreinigung eine Federbürste mit rotierenden Federn (z.B. EMU-Federn) einzusetzen, was an sich aus dem Stand der Technik ebenfalls bekannt ist.

Ferner ist zu erwähnen, dass die erfindungsgemäße Reinigungskabine vorzugsweise einlaufseitig und/oder auslaufseitig eine Schleuse aufweist, um den Austritt von Schmutz aus der Reinigungskabine zu vermeiden, wobei die Schleuse beispielsweise als Sperrluftportal ausgebildet sein kann. Derartige Sperrluftportale sind an sich aus dem Stand der Technik bekannt und müssen daher nicht näher beschrieben werden. Hierbei besteht die Möglichkeit, dass die gesamte Reinigungsanlage nur eine einzige Schleuse aufweist, die an der Reinigungskabine auslaufseitig angeordnet ist. Alternativ besteht die Möglichkeit, dass die gesamte Reinigungsanlage genau zwei Schleusen aufweist, die an der Reinigungskabine einlaufseitig und auslaufseitig angeordnet sind. Die Durchführung der Innenreinigung und der Außenreinigung in einer einzigen Reinigungskabine ermöglicht also einen Verzicht auf eine oder mehrere Schleusen, die beim Stand der Technik erforderlich sind, wenn mehrere Reinigungskabinen vorgesehen sind.

In dem bevorzugten Ausführungsbeispiel weist die Reinigungskabine eine Kabinenlänge auf, die kleiner ist als 10m, 9m, 8m, 7m oder sogar kleiner als 6,5m. Die Kabinenlänge ist also vorzugsweise so kurz, dass nur eine einzige Kraftfahrzeugkarosserie in die Reinigungskabine passt. Die gesamte Reinigungsanlage weist also eine entsprechend kurze Kabinenlänge auf, da die Reinigungsanlage nur eine einzige Reinigungsstation aufweist.

Darüber hinaus ermöglicht die Erfindung eine Reduzierung der Kabinenbreite der Reinigungskabine auf weniger als 6m, 5m oder sogar weniger als 4,2m, wobei sich diese Maße auf die Innenbreite der Reinigungskabine beziehen. Die Außenbreite der Reinigungskabine lässt sich dagegen durch die Erfindung auf Werte von weniger als 7m, 6m oder sogar weniger als 5,5m reduzieren.

In dem bevorzugten Ausführungsbeispiel der Erfindung weist die Reinigungskabine eine Kabinenwand auf, die mindestens teilweise durchsichtig ist, um von außerhalb der Reinigungskabine eine Sichtkontrolle der Reinigung zu ermöglichen. Weiterhin ist zu bemerken, dass die Innenreinigungseinrichtung und die Außenreinigungseinrichtung so angeordnet sind, dass sowohl die Innenreinigungseinrichtung als auch die Außenreinigungseinrichtung nacheinander auf dasselbe Bauteil zugreifen können, ohne dass das jeweilige Bauteil entlang dem Förderweg weitertransportiert werden muss. Die Innenreinigung und die Außenreinigung können also nacheinander bei stillstehendem Bauteil in derselben Reinigungsstation durchgeführt werden.

Ein weiterer Vorteil der Erfindung besteht darin, dass in der gemeinsamen Reinigungsstation für die Innen- und Außenreinigung ein einheitliches Maschinenkonzept realisiert werden kann, indem mehrachsige Roboter sowohl für die Innenreinigung als auch für die Außenreinigung eingesetzt werden.

Darüber hinaus ist zu erwähnen, dass die Erfindung nicht nur Schutz beansprucht für die vorstehend beschriebene erfindungsgemäße Reinigungsanlage, sondern auch für eine Lackieranlage zur Lackierung von Kraftfahrzeugkarosseriebauteilen, in der eine derartige Reinigungsanlage eingebaut ist.

Schließlich umfasst die Erfindung auch ein erfindungsgemäßes Betriebsverfahren für eine Lackieranlage, wobei die Außenreinigung und die Innenreinigung in derselben Reinigungsstation erfolgt.

Andere vorteilhafte Weiterbildungen der Erfindung sind in den Unteransprüchen gekennzeichnet oder werden nachstehend zusammen mit der Beschreibung des bevorzugten Ausführungsbeispiels der Erfindung anhand der Figuren näher erläutert. Es zeigen:
- Figur 1: eine Aufsichtsdarstellung einer erfindungsgemäßen Reinigungsanlage mit nur einer einzigen Reinigungsstation, in der sowohl eine Außenreinigung als auch eine Innenreinigung erfolgt.
- Figur 2: das erfindungsgemäße Betriebsverfahren einer Lackieranlage in Form eines Flussdiagramms, sowie
- Figur 3: eine herkömmliche Reinigungsanlage in einer Lackieranlage, wobei die Reinigungsanlage für die Außenreinigung und für die Innenreinigung jeweils eine getrennte Reinigungsstation aufweist.

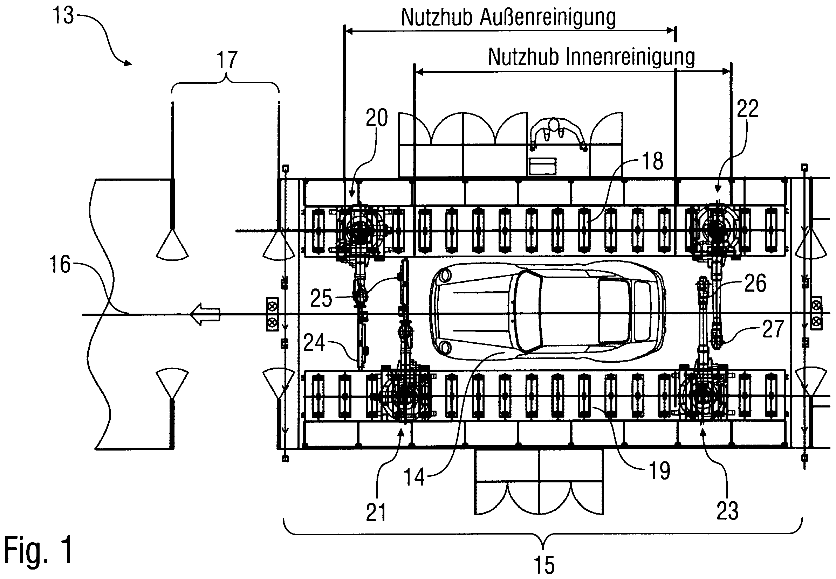

Figur 1 zeigt eine erfindungsgemäße Reinigungsanlage 13, die in einer Lackieranlage zur Lackierung von Kraftfahrzeugkarosseriebauteilen 14 eingesetzt werden kann, um die Kraftfahrzeugkarosseriebauteile 14 sowohl innen als auch außen zu reinigen.

Im Gegensatz zu der eingangs beschriebenen herkömmlichen Reinigungsanlage 1 gemäß dem Stand der Technik (vgl. Fig. 3) weist die erfindungsgemäße Reinigungsanlage 13 nur eine einzige Reinigungsstation 15 auf, in der die Kraftfahrzeugkarosseriebauteile 14 sowohl innen als auch außen gereinigt werden.

Die zu reinigenden Kraftfahrzeugkarosseriebauteile 14 werden hierbei auf einem Förderweg 16 in Pfeilrichtung durch die Reinigungsanlage 13 transportiert, wobei in Förderrichtung hinter der Reinigungsanlage 13 eine Tauchlackierstation und/oder eine oder mehrere Lackierkabinen angeordnet sind, in denen das Kraftfahrzeugkarosseriebauteil 14 dann nach der Reinigung lackiert wird.

An der Auslaufseite der Reinigungsstation 15 ist eine herkömmliche Schleuse 17 angeordnet, die als Sperrluftportal ausgebildet ist und einen Luftvorhang am Auslauf der Reinigungsstation 15 erzeugt, um einen Einfluss auf nachgelagerte Anlagenteile zu verhindern.

In der Reinigungsstation 15 befinden sich beiderseits des Förderwegs 16 zwei Verfahrachsen 18, 19 des Typs EcoRail™ H, wobei an jeder der beiden Verfahrachsen 18, 19 jeweils ein Roboter 20, 21 für die Außenreinigung und jeweils ein Roboter 22, 23 für die Innenreinigung verfahrbar angeordnet ist.

Die beiden Roboter 20, 21 für die Außenreinigung sind hierbei auslaufseitig angeordnet, während die Roboter 22, 23 für die Innenreinigung in der Lackierkabine 15 einlaufseitig angeordnet sind.

Weiterhin ist zu erwähnen, dass die Roboter 20, 21 für die Außenreinigung einen bestimmten Nutzhub haben, innerhalb dessen die Roboter 20, 21 entlang dem Förderweg 16 bewegt werden können. In gleicher Weise haben auch die Roboter 22, 23 für die Innenreinigung einen begrenzten Nutzhub, innerhalb dessen die Roboter 22, 23 entlang dem Förderweg 16 bewegt werden können. Hierbei ist zu erwähnen, dass der Nutzhub der Roboter 20, 21 für die Außenreinigung gegenüber dem Nutzhub der Roboter 22, 23 für die Innenreinigung in Förderrichtung versetzt ist. Dies bedeutet, dass die Roboter 20, 21 für die Außenreinigung nicht ganz bis zu der Einlaufseite der Reinigungsstation 15 bewegt werden können, während die Roboter 22, 23 für die Innenreinigung nicht ganz bis zu der Auslaufseite der Reinigungsstation 15 bewegt werden können.

In diesem Ausführungsbeispiel werden Verfahrachsen 18, 19 verwendet, bei denen sich die Roboter 20-23 entlang der Verfahrachse 18, 19 nicht passieren können. Es besteht jedoch alternativ auch die Möglichkeit, dass - wie in EP 1 609 532 A1 - Verfahrachsen eingesetzt werden, die es ermöglichen, dass sich die Roboter 20-23 gegenseitig passieren können.

Die Roboter 20, 21 für die Außenreinigung weisen deshalb eine bestimmte Parkstellung auf, die an der Auslaufseite der Reinigungsstation 15 und damit außerhalb des Nutzhubs der Roboter 22, 23 für die Innenreinigung liegt. Dies bietet den Vorteil, dass keine störenden Wechselwirkungen (z.B. Roboterkollisionen) zwischen den Robotern 20, 21 für die Außenreinigung einerseits und den Robotern 22, 23 für die Innenreinigung andererseits auftreten könne, wenn sich die Roboter 20, 21 für die Außenreinigung in ihrer auslaufseitigen Parkposition befinden.

In gleicher Weise haben auch die Roboter 22, 23 eine Parkposition an der Einlaufseite der Reinigungsstation 15 und damit außerhalb des Nutzhubs der Roboter 20, 21 für die Außenreinigung. Eine störende Wechselwirkung (z.B. Roboterkollision) zwischen den Robotern ist also auch dann ausgeschlossen, wenn sich die Roboter 22, 23 für die Innenreinigung in ihrer einlaufseitigen Parkposition innerhalb der Reinigungsstation 15 befinden.

Weiterhin ist zu erwähnen, dass die Roboter 20, 21 für die Außenreinigung als Reinigungswerkzeug jeweils eine Schwertbürste 24, 25 führen. Derartige Schwertbürsten sind an sich aus dem Stand der Technik bekannt und müssen deshalb nicht mehr beschrieben werden. Lediglich beispielhaft wird jedoch auf die Schwertbürsten verwiesen, die von der Firma Wandres GmbH Micro-Cleaning vertrieben werden und die in DE 103 29 499 B3 beschrieben.

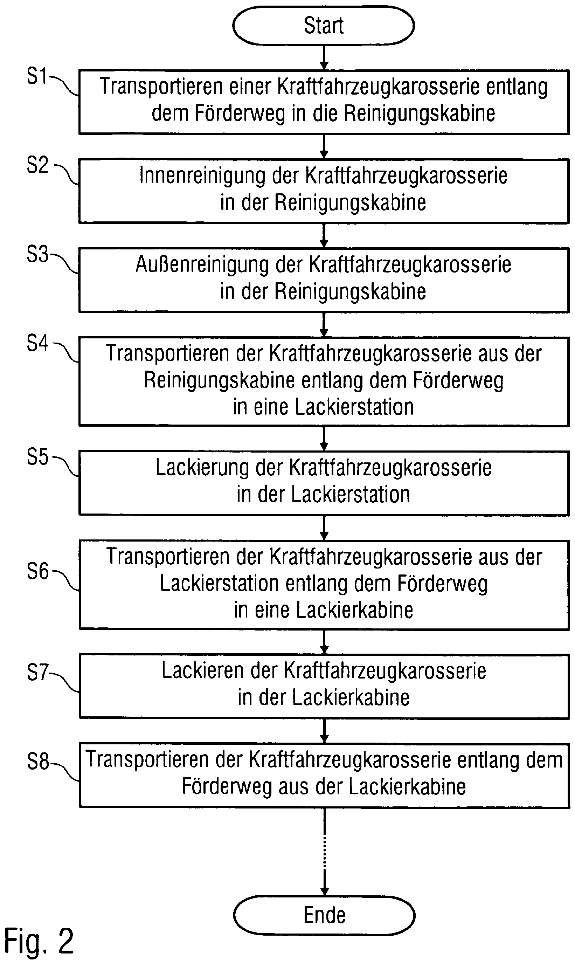

Die Roboter 22, 23 für die Innenreinigung führen dagegen als Reinigungswerkzeug vorzugsweise einen Saug-Blaser 26, 27 auf. Das Flussdiagramm gemäß Figur 2 verdeutlicht den Betriebsablauf einer Lackieranlage mit einer erfindungsgemäßen Reinigungsanlage, wie sie beispielsweise in Figur 1 dargestellt ist.

In einem ersten Schritt S1 werden die Kraftfahrzeugkarosserien entlang dem Förderweg in die Reinigungsstation transportiert.

In einem zweiten Schritt S2 erfolgt dann eine Innenreinigung der Kraftfahrzeugkarosserie in der Reinigungsstation, gefolgt von einer Außenreinigung der Kraftfahrzeugkarosserie in derselben Reinigungsstation in dem Schritt S3.

In einem Schritt S4 werden die gereinigten Kraftfahrzeugkarosserien dann aus der Reinigungsstation entlang dem Förderweg in eine Lackierstation transportiert, in der dann in einem Schritt S5 eine Lackierung der Kraftfahrzeugkarosserien erfolgt.

In einem Schritt S6 werden die Kraftfahrzeugkarosserien dann aus der Lackierstation entlang dem Förderweg in eine Lackierkabine transportiert, in der dann in einem Schritt S7 eine Lackierung (z.B. zuerst Füller dann Basislack und dann Klarlack) der Kraftfahrzeugkarosserie erfolgt.

Die lackierten Kraftfahrzeugkarosserien werden dann in einem Schritt S8 aus der Lackierkabine abtransportiert, wobei sich dann weitere Lackierkabinen anschließen können, in denen weitere Lackschichten aufgetragen werden.

### Bezugszeichenliste:

- 1: Reinigungsanlage
- 2: Reinigungskabine
- 3: Reinigungskabine
- 4: Förderweg
- 5: Dachstation
- 6: Seitenstation
- 7: Reinigungsroboter
- 8: Reinigungsroboter
- 9: Schwertbürste
- 10: Schwertbürste
- 11: Verfahrachse
- 12: Verfahrachse
- 13: Reinigungsanlage
- 14: Kraftfahrzeugkarosseriebauteil
- 15: Reinigungsstation
- 16: Förderweg
- 17: Schleuse
- 18: Verfahrachse
- 19: Verfahrachse
- 20: Roboter für die Außenreinigung
- 21: Roboter für die Außenreinigung
- 22: Roboter für die Innenreinigung
- 23: Roboter für die Innenreinigung
- 24: Schwertbürste
- 25: Schwertbürste
- 26: Saug-Blaser
- 27: Saug-Blaser

## Patentansprüche

1. Reinigungsanlage (13) zur Reinigung von Bauteilen (14), insbesondere zur Reinigung von Kraftfahrzeugkarosseriebauteilen vor einer Lackierung der Kraftfahrzeugkarosseriebauteile in einer Lackieranlage, mit
a) einer Reinigungsstation (15), die dazu eingerichtet ist, dass die Bauteile (14) darin gereinigt werden,
b) einem Förderweg (16), der dazu eingerichtet ist, dass die zu reinigenden Bauteile (14) entlang dem Förderweg (16) durch die Reinigungsstation (15) transportiert werden,
c) einer Innenreinigungseinrichtung (22, 23, 26, 27) zur Innenreinigung der Bauteile (14), wobei die Innenreinigungseinrichtung (22, 23, 26, 27) mindestens einen mehrachsigen Roboter (22, 23) aufweist, der ein Reinigungswerkzeug (26, 27) zur Innenreinigung führt, und
d) einer Außenreinigungseinrichtung (20, 21, 24, 25) zur Außenreinigung der Bauteile (14),
e) wobei die Innenreinigungseinrichtung (22, 23, 26, 27) und die Außenreinigungseinrichtung (20, 21, 24, 25) beide gemeinsam in derselben Reinigungsstation (15) angeordnet sind, so dass die Innenreinigung und die Außenreinigung der Bauteile (14) in derselben Reinigungsstation (15) erfolgt,
**dadurch gekennzeichnet,**
f) dass die Außenreinigungseinrichtung (20, 21, 24, 25) mindestens einen mehrachsigen Roboter (20, 21) aufweist, der ein Reinigungswerkzeug (24, 25) zur Außenreinigung führt, und
g) dass die Innenreinigungseinrichtung (22, 23, 26, 27) und die Außenreinigungseinrichtung (20, 21, 24, 25) so angeordnet sind, dass sie nacheinander auf dasselbe Bauteil (14) zugreifen können, ohne dass das Bauteil (14) entlang dem Förderweg (16) weiter transportiert werden muss.

2. Reinigungsanlage (13) nach Anspruch 1, **gekennzeichnet durch** eine gemeinsame Reinigungskabine (15), die dazu eingerichtet ist, dass darin sowohl die Innenreinigung als auch die Außenreinigung erfolgt.

3. Reinigungsanlage (13) nach Anspruch 1 oder 2,
**dadurch gekennzeichnet,**
a) **dass** der Roboter für die Innenreinigung (22, 23) und/oder der Roboter für die Außenreinigung (20, 21) an einer Verfahrachse (18, 19) verfahrbar ist, und
b) **dass** die Verfahrachse (18, 19) linear verläuft, und
c) **dass** die Verfahrachse (18, 19) horizontal verläuft, und
d) **dass** die Verfahrachse (18, 19) entlang dem Förderweg (16) verläuft, und
e) **dass** die Verfahrachse (18, 19) einen Nutzhub aufweist, der größer ist als 2m, 3m, 4m oder 5m, und
f) **dass** der Roboter zur Innenreinigung (22, 23) an derselben Verfahrachse (18, 19) verfahrbar ist wie der Roboter zur Außenreinigung (20, 21), und
g) **dass** sich die Roboter zur Innenreinigung und die Roboter zur Außenreinigung entlang der Verfahrachse passieren können.

4. Reinigungsanlage (13) nach einem der vorhergehenden Ansprüche, **dadurch gekennzeichnet,**
a) **dass** auf beiden Seiten des Förderwegs (16) jeweils eine Verfahrachse (18, 19) angeordnet ist, und dass an jeder der beiden Verfahrachsen jeweils ein Roboter für die Innenreinigung (22, 23) und jeweils ein Roboter für die Außenreinigung (20, 21) verfahrbar geführt ist, und
b) **dass** die Roboter für die Innenreinigung (22, 23) in der Reinigungsstation (15) einlaufseitig angeordnet sind, und dass die Roboter für die Außenreinigung (20, 21) in der Reinigungsstation (15) auslaufseitig angeordnet sind, und
c) **dass** die Roboter für die Innenreinigung (22, 23) einen bestimmten Nutzhub entlang dem Förderweg (16) haben, und dass die Roboter für die Außenreinigung (20, 21) einen Nutzhub entlang dem Förderweg (16) haben, und dass der Nutzhub der Roboter für die Innenreinigung (22, 23) gegenüber dem Nutzhub der Roboter für die Außenreinigung (20, 21) entlang dem Förderweg (16) versetzt ist.

5. Reinigungsanlage (13) nach Anspruch 4,
**dadurch gekennzeichnet,**
a) **dass** die Roboter für die Innenreinigung (22, 23) eine Parkposition haben, die außerhalb des Nutzhubs der Roboter für die Außenreinigung (20, 21) liegt, und/oder
b) **dass** die Roboter für die Außenreinigung (20, 21) eine Parkposition haben, die außerhalb des Nutzhubs der Roboter für die Innenreinigung (22, 23) liegt.

6. Reinigungsanlage (13) nach einem der Ansprüche 3 bis 5, **gekennzeichnet durch** eine Robotersteuerung, die dazu eingerichtet ist, sowohl die Roboter für die Innenreinigung (22, 23) als auch die Roboter für die Außenreinigung (20, 21) zu steuern, wobei die Robotersteuerung dazu eingerichtet ist, die Steuerung der Roboter für die Innenreinigung (22, 23) mit der Steuerung der Roboter für die Außenreinigung (20, 21) zu koordinieren.

7. Reinigungsanlage (13) nach einem der Ansprüche 3 bis 6, **dadurch gekennzeichnet,**
a) **dass** das Reinigungswerkzeug (26, 27) für die Innenreinigung eines der folgenden Werkzeuge ist: Saugdüse, insbesondere an einer Saugpistole; Saug-Blaser, der die zu reinigende Bauteiloberfläche sowohl anblasen als auch absaugen kann; Aerosol-Sauger, und/oder
b) **dass** das Reinigungswerkzeug (24, 25) für die Außenreinigung eines der folgenden Werkzeuge ist:
b1) Schwertbürste;
b2) Saugdüse, insbesondere an einer Saugpistole;
b3) Saug-Blaser, der die zu reinigende Bauteiloberfläche sowohl anblasen als auch absaugen kann;
b4) Aerosol-Sauger;
b5) Federbürste mit rotierenden Federn.

8. Reinigungsanlage (13) nach einem der vorhergehenden Ansprüche, **dadurch gekennzeichnet,**
a) **dass** die Reinigungsstation (15) einlaufseitig und/oder auslaufseitig eine Schleuse (17), insbesondere ein Sperrluftportal, aufweist, und/oder
b) **dass** die gesamte Reinigungsanlage (13) nur eine einzige Schleuse (17) aufweist, die an der Reinigungsstation (15) auslaufseitig angeordnet ist, oder
c) **dass** die gesamte Reinigungsanlage (13) genau zwei Schleusen aufweist, die an der Reinigungsstation (15) einlaufseitig und auslaufseitig angeordnet sind, und/oder
d) **dass** die Reinigungskabine (15) eine Kabinenlänge aufweist, die kleiner ist als 10m, 9m, 8m, 7m oder 6,5m, und/oder
e) **dass** die Reinigungskabine (15) so kurz ist, dass in die Reinigungskabine (15) nur eine einzige Kraftfahrzeugkarosserie (14) passt, und/oder
f) **dass** die Reinigungskabine (15) innen eine Kabinenbreite aufweist, die kleiner ist als 6m oder 5,5m oder 5,2m, und/oder
g) **dass** die Reinigungskabine (15) außen eine Kabinenbreite aufweist, die kleiner ist als 7m, 6m oder 5,5m.

9. Reinigungsanlage (13) nach einem der Ansprüche 2 bis 8, **dadurch gekennzeichnet, dass** die Reinigungskabine (15) eine Kabinenwand aufweist, die mindestens teilweise durchsichtig ist, um von außerhalb der Reinigungskabine (15) eine Sichtkontrolle der Reinigung zu ermöglichen.

10. Lackieranlage mit
a) einer Reinigungsanlage (13) nach einem der vorhergehenden Ansprüche, und
b) mindestens einer Lackierkabine, die auf dem Förderweg (16) in Förderrichtung hinter der Reinigungskabine (15) angeordnet ist und die dazu eingerichtet ist, dass die Bauteile (14) darin nach ihrer Reinigung mit einem Beschichtungsmittel beschichtet werden.

11. Betriebsverfahren für eine Lackieranlage zur Lackierung von Bauteilen (14), insbesondere für eine Lackieranlage nach Anspruch 10, mit den folgenden Schritten:
a) Innenreinigung der Bauteile (14) in einer Reinigungsstation (15) mittels eines mehrachsigen Roboters (22, 23), der ein Reinigungswerkzeug (26, 27) zur Innenreinigung führt,
b) Außenreinigung der Bauteile (14) in einer Reinigungsstation (15),
c) wobei die Außenreinigung und die Innenreinigung in derselben Reinigungsstation (15) erfolgt,
**dadurch gekennzeichnet,**
d) dass die Außenreinigung mittels eines mehrachsigen Roboter (20, 21) erfolgt, der ein Reinigungswerkzeug (24, 25) zur Außenreinigung führt, und
e) dass die Innenreinigung und die Außenreinigung bei den einzelnen Bauteilen (14) erfolgt, ohne dass die einzelnen Bauteile (14) zwischen der Innenreinigung und der Außenreinigung entlang dem Förderweg (16) weitertransportiert werden.

12. Betriebsverfahren nach Anspruch 11,
**dadurch gekennzeichnet,**
a) **dass** die Außenreinigung und die Innenreinigung in derselben Reinigungskabine (15) erfolgt, und/oder
b) **dass** zuerst die Innenreinigung durchgeführt wird und dann die Außenreinigung.

13. Betriebsverfahren nach einem der Ansprüche 11 bis 12, **gekennzeichnet durch** folgende Schritte in dieser Reihenfolge:
a) Positionieren von Robotern für die Außenreinigung (20, 21) in einer auslaufseitigen Parkposition in der Reinigungsstation (15),
b) Durchführung der Innenreinigung mit Robotern für die Innenreinigung (22, 23), während sich die Roboter für die Außenreinigung (20, 21) in ihrer Parkposition befinden,
c) Positionieren der Roboter für die Innenreinigung (22, 23) in einer einlaufseitigen Parkposition in der Reinigungsstation (15),
d) Durchführung der Außenreinigung mit den Robotern für die Außenreinigung (20, 21), während sich die Roboter für die Innenreinigung (22, 23) in ihrer einlaufseitigen Parkposition befinden,
e) Lackierung der Bauteile (14) nach der Außenreinigung und der Innenreinigung.

14. Betriebsverfahren nach einem der Ansprüche 11 bis 13, **dadurch gekennzeichnet, dass** in der gemeinsamen Reinigungskabine (15) für die Innenreinigung und der Außenreinigung zusätzlich zu der Innenreinigungseinrichtung (22, 23, 26, 27) und der Außenreinigungseinrichtung (20, 21, 24, 25) keine weitere Reinigungseinrichtung und keine Beschichtungseinrichtung angeordnet ist.

## Claims

1. Cleaning system (13) for the cleaning of components (14), in particular for the cleaning of vehicle bodywork components prior to painting of the vehicle bodywork components in a painting plant, with
a) a cleaning station (15) adapted to clean the components (14) therein,
b) a conveying path (16) adapted to transport the components (14) to be cleaned along the conveying path (16) through the cleaning station (15),
c) an internal cleaning device (22, 23, 26, 26, 27) for the internal cleaning of the components (14), the internal cleaning device (22, 23, 26, 27) having at least one multi-axis robot (22, 23) which leads a cleaning tool (26, 27) for the internal cleaning, and
d) an external cleaning device (20, 21, 24, 25) for the external cleaning of the components (14),
e) wherein the internal cleaning device (22, 23, 26, 27) and the external cleaning device (20, 21, 24, 25) are both arranged together in the same cleaning station (15), so that the internal and external cleaning of the components (14) is carried out in the same cleaning station (15),
**characterised in that**
f) the external cleaning device (20, 21, 24, 25) comprises at least one multi-axis robot (20, 21) which leads a cleaning tool (24, 25) for the external cleaning, and
g) the internal cleaning device (22, 23, 26, 27) and the external cleaning device (20, 21, 24, 25) are arranged in such a way that they can access the same component (14) one after the other without the component (14) having to be transported further along the conveying path (16) .

2. Cleaning system (13) according to claim 1, **characterized by** a common cleaning cabin (15) which is set up so that both the internal and external cleaning is carried out therein.

3. Cleaning system (13) according to claim 1 or 2,
**characterised in that**
a) the robot is movable for internal cleaning (22, 23) and/or the robot for external cleaning (20, 21) is movable on a traversing axis (18, 19), and
b) the traversing axis (18, 19) is linear, and
c) the traversing axis (18, 19) is horizontal, and
d) the traversing axis (18, 19) runs along the conveying path (16), and
e) the traversing axis (18, 19) has a useable travelling distance greater than 2m, 3m, 4m or 5m; and
f) the robot for internal cleaning (22, 23) is movable on the same traversing axis (18, 19) as the robot for external cleaning (20, 21), and
g) the robots for internal cleaning can pass the robots for external cleaning along the traversing axis.

4. Cleaning system (13) according to one of the previous claims, **characterized in that**
a) a traversing axis (18, 19) is arranged on both sides of the conveying path (16), and **in that** a robot (22, 23) for the internal cleaning and a robot (20, 21) for the external cleaning is guided in a movable manner on each of the two traversing axes, respectively, and
b) the robots for internal cleaning (22, 23) are arranged in the cleaning station (15) on the inlet side, and **in that** the robots for external cleaning (20, 21) are arranged in the cleaning station (15) on the outlet side, and
c) **in that** the robots for internal cleaning (22, 23) have a certain useable travelling range along the conveyor path (16), and **in that** the robots for external cleaning (20, 21) have a useable travelling range along the conveyor path (16), and **in that** the useable travelling range of the robots for internal cleaning (22, 23) is offset against the useable travelling range of the robots for external cleaning (20, 21) along the conveyor path (16).

5. Cleaning system (13) according to claim 4,
**characterised in that**
a) that the robots for internal cleaning (22, 23) have a parking position outside the robots' useable travelling range for external cleaning (20, 21), and/or
b) that the robots for external cleaning (20, 21) have a parking position which lies outside the useable travelling range of the robots for internal cleaning (22, 23).

6. Cleaning system (13) according to one of Claims 3 to 5, **characterized by** a robot controller adapted to control both the robots for internal cleaning (22, 23) and the robots for external cleaning (20, 21), said robot controller being adapted to coordinate the control of the robots for internal cleaning (22, 23) with the control of the robots for external cleaning (20, 21).

7. Cleaning system (13) according to one of Claims 3 to 6, **characterized in that**
a) the cleaning tool (26, 27) for internal cleaning is one of the following tools: suction nozzle, in particular on a suction gun; suction blower, which can both blow on and suck off the component surface to be cleaned; aerosol suction device, and/or
b) the cleaning tool (24, 25) for external cleaning is one of the following tools:
b1) sword brush;
b2) suction nozzle, in particular on a suction gun;
b3) suction blowers, which can both blow on and suck off the surface of the component to be cleaned;
b4) aerosol vacuum cleaner;
b5) spring brush with rotating springs.

8. Cleaning system (13) according to one of the preceding claims, **characterized in that**
a) the cleaning station (15) has an inlet and/or outlet side of a sluice (17), in particular a sealing air portal, and/or
b) the entire cleaning system (13) has only one single sluice (17) arranged at the cleaning station (15) at the outlet side, or
c) the entire cleaning system (13) has exactly two sluices, which are arranged at the cleaning station (15) on the inlet and outlet sides, and/or
d) the cleaning cabin (15) has a cabin length of less than 10m, 9m, 8m, 7m or 6.5m; and/or
e) the cleaning cabin (15) is so short that only one single vehicle body (14) fits into the cleaning cabin (15); and/or
f) the cleaning cabin (15) has an interior cabin width of less than 6m or 5.5m or 5.2m; and/or
g) the outside of the cleaning cabin (15) has a cabin width smaller than 7m, 6m or 5.5m.

9. Cleaning system (13) according to one of Claims 2 to 8, **characterized in that** the cleaning cabin (15) has a cabin wall which is at least partially transparent in order to enable a visual inspection of the cleaning from outside the cleaning cabin (15).

10. Paint shop with
a) a cleaning system (13) according to one of the foregoing claims, and
b) at least one painting booth which is arranged on the conveying path (16) in the conveying direction behind the cleaning booth (15) and which is arranged so that the components (14) therein are coated with a coating agent after cleaning.

11. A method of operation for a paint shop for the painting of components (14), in particular for a paint shop according to Claim 10, comprising the following steps:
a) internal cleaning of the components (14) in a cleaning station (15) by means of a multi-axis robot (22, 23), which guides a cleaning tool (26, 27) for the internal cleaning,
b) external cleaning of the components (14) in a cleaning station (15),
c) wherein the external and internal cleaning is carried out in the same cleaning station (15),
**characterised in that**
d) the external cleaning is carried out by means of a multi-axis robot (20, 21) which leads a cleaning tool (24, 25) for the external cleaning, and
e) the internal and external cleaning of the individual components (14) is carried out without further transport of the individual components (14) between the internal cleaning and the external cleaning along the conveying path (16).

12. Method of operation according to claim 11,
**characterised in that**
a) the exterior cleaning and the interior cleaning is carried out in the same cleaning cabin (15), and/or
b) the interior cleaning is carried out first and then the exterior cleaning.

13. Method of operation in accordance with one of Claims 11 to 12, **characterized by** the following steps in that order:
a) positioning of robots for external cleaning (20, 21) in a parked position on the outlet side of the cleaning station (15),
b) carrying out the internal cleaning with robots for internal cleaning (22, 23), while the robots for external cleaning (20, 21) are in their parking position,
c) positioning the robots for internal cleaning (22, 23) in a parked position on the inlet side of the cleaning station (15),
d) performing the external cleaning with the external cleaning robots (20, 21) while the internal cleaning robots (22, 23) are in their inlet side parked position,
e) painting of the components (14) after external and internal cleaning.

14. Method of operation according to one of Claims 11 to 13, **characterized in that** in the common cleaning cabin (15) for internal cleaning and external cleaning in addition to the internal cleaning device (22, 23, 26, 27) and the external cleaning device (20, 21, 24, 25) there is no further cleaning device and no coating device.

## Revendications

1. Installation de nettoyage (13) pour le nettoyage de composants (14), plus particulièrement pour le nettoyage de composants de carrosseries de véhicules avant une peinture des composants de carrosseries de véhicules avec une installation de peinture, avec
a) une station de nettoyage (15), qui est conçue de façon à ce que les composants (14) à l'intérieur soient nettoyés,
b) un trajet de convoyage (16) qui est conçu de façon à ce que les composants (14) à nettoyer soient transportés le long du trajet de convoyage (16) à travers la station de nettoyage (15),
c) un dispositif de nettoyage interne (22, 23, 26, 27) pour le nettoyage interne des composants (14), le dispositif de nettoyage interne (22, 23, 26, 27) comprenant au moins un robot multi-axial (22, 23), qui guide un outil de nettoyage (26, 27) pour le nettoyage interne et
d) un dispositif de nettoyage externe (20, 21, 24, 25) pour le nettoyage de externe des composants (14),
e) le dispositif de nettoyage interne (22, 23, 26, 27) et le dispositif de nettoyage externe (20, 21, 24, 25) étant disposés tous les deux ensemble dans la même station de nettoyage (15), de façon à ce que le nettoyage interne et le nettoyage externe des composants (14) aient lieu dans la même station de nettoyage (15),
**caractérisée en ce que**
f) le dispositif de nettoyage externe (20, 21, 24, 25) comprend au moins un robot multi-axial (20, 21) qui guide un outil de nettoyage (24, 25) pour le nettoyage externe et
g) le dispositif de nettoyage interne (22, 23, 26, 27) et le dispositif de nettoyage externe (20, 21, 24, 25) sont disposés de façon à ce qu'ils puissent accéder successivement au même composant (14), sans que le composant (14) doive être transporté plus loin le long du trajet de convoyage (16).

2. Installation de nettoyage (13) selon la revendication 1, **caractérisée par** une cabine de nettoyage (15) commune, qui est conçue de façon à ce qu'à l'intérieur ait lieu aussi bien le nettoyage interne que le nettoyage externe.

3. Installation de nettoyage (13) selon la revendication 1 ou 2,
**caractérisée en ce que**
a) le robot pour le nettoyage interne (22, 23) et/ou le robot pour le nettoyage externe (20, 21) est mobile sur un axe de déplacement (18, 19) et
b) l'axe de déplacement (18, 19) est linéaire et
c) l'axe de déplacement (18, 19) est horizontal et
d) l'axe de déplacement (18, 19) s'étend le long du trajet de convoyage (16) et
e) l'axe de déplacement (18, 19) présente une course utilise supérieure à 2 m, 3 m, 4 m ou 5 m et
f) le robot pour le nettoyage interne (22, 23) est mobile sur le même axe de déplacement (18, 19) que le robot pour le nettoyage externe (20, 21) et
g) les robots pour le nettoyage interne et les robots pour le nettoyage externe peuvent passer le long de l'axe de déplacement.

4. Installation de nettoyage (13) selon l'une des revendications précédentes, **caractérisée en ce que**
a) de chaque côté du trajet de convoyage (16), est disposé un axe de déplacement (18, 19) et **en ce que**, sur chacun des deux axes de déplacements, est guidé de manière mobile un robot pour le nettoyage interne (22, 23) et un robot pour le nettoyage externe (20, 21),
b) les robots pour le nettoyage interne (22, 23) sont disposés du côté de l'entrée dans la station de nettoyage (15), et **en ce que** les robots pour le nettoyage externe (20, 21) sont disposés du côté de la sortie dans la station de nettoyage (15) et
c) les robots pour le nettoyage interne (22, 23) présentent une course utile déterminé le long du trajet de convoyage (16) et **en ce que** les robots pour le nettoyage externe (20, 21) présentent une course utile le long du trajet de convoyage (16) et **en ce que** la course utile des robots pour le nettoyage interne (22, 23) est décalée le long du trajet de convoyage par rapport à la course utile des robots pour le nettoyage externe (20, 21).

5. Installation de nettoyage (13) selon la revendication 4,
**caractérisée en ce que**
a) les robots pour le nettoyage interne (22, 23) présentent une position de stationnement, qui se trouve à l'extérieur de la course utile des robots pour le nettoyage externe (20, 21) et/ou
b) les robots pour le nettoyage externe (20, 21) présentent une position de stationnement, qui se trouve à l'extérieur de la course utile des robots pour le nettoyage interne (22, 23).

6. Installation de nettoyage (13) selon l'une des revendications 3 à 5, **caractérisée par** une commande de robot, qui est conçue pour commander aussi bien les robots pour le nettoyage interne (22, 23) que les robots pour le nettoyage externe (20, 21), la commande de robot étant conçue pour coordonner la commande des robots pour le nettoyage interne (22, 23) avec la commande des robots pour le nettoyage externe (20, 21).

7. nstallation de nettoyage (13) selon l'une des revendications 3 à 6, **caractérisée en ce que**
a) l'outil de nettoyage (26, 27) pour le nettoyage interne est un des outils suivants : buse d'aspiration, plus particulièrement sur un pistolet d'aspiration ; soufflante d'aspiration, qui peut aussi souffler qu'aspirer la surface du composant à nettoyer ; un aspirateur d'aérosols et/ou
b) **en ce que** l'outil de nettoyage (24, 25) pour le nettoyage externe est un des outils suivants :
b1) brosse ensiforme ;
b2) buse d'aspiration plus particulièrement sur un pistolet d'aspiration ;
b3) soufflante d'aspiration qui peut aussi souffler qu'aspirer la surface du composant à nettoyer ;
b4) aspirateur d'aérosols ;
b5) brosse à ressorts avec ressorts rotatifs

8. Installation de nettoyage (13) selon l'une des revendications précédentes, **caractérisée en ce que**
a) la station de nettoyage (15) comprend, du côté de l'entrée, et/ou du côté de la sortie, un sas (17), plus particulièrement un portail à soufflage d'air et/ou
b) l'ensemble de l'installation de nettoyage (13) comprend un seul sas (17) qui est disposé du côté de la sortie sur la station de nettoyage (15) ou
c) l'ensemble de l'installation de nettoyage (13) comprend exactement deux sas qui sont disposés du côté de l'entrée et du côté de la sortie sur la station de nettoyage (15) et/ou
d) la cabine de nettoyage (15) présente une longueur de cabine inférieure à 10 m, 9 m, 8 m, 7 m ou 6,5 m et/ou
e) la cabine de nettoyage (15) est courte de façon à ce qu'une seule carrosserie de véhicule (14) passe dans la cabine de nettoyage (15) et/ou
f) la cabine de nettoyage (15) présente à l'intérieur une largeur de cabine inférieure à 6 m, 5,5 m ou 5,2 m et/ou
g) la cabine de nettoyage (15) présente à l'extérieur une largeur de cabine inférieure à 7 m, 6 m ou 5,5 m.

9. Installation de nettoyage (13) selon l'une des revendications 2 à 8, **caractérisée en ce que** la cabine de nettoyage (15) comprend une paroi de cabine qui est au moins partiellement transparente, afin de permettre un contrôle visuel du nettoyage de l'extérieur de la cabine de nettoyage (15).

10. Installation de peinture avec
a) une installation de nettoyage (13) selon l'une des revendications précédentes et
b) au moins une cabine de peinture, qui est disposée sur le trajet de convoyage (16), dans la direction de convoyage derrière la cabine de nettoyage (15) et qui est conçue de façon à ce que les composants (14) à l'intérieur soient revêtus d'un produit de revêtement après leur nettoyage.

11. Procédé d'exploitation d'une installation de peinture pour la peinture de composants (14), plus particulièrement pour une installation de peinture selon la revendication 10, avec les étapes suivantes :
a) nettoyage interne des composants (14) dans une station de nettoyage (15) au moyen d'un robot multi-axial (22, 23), qui guide un outil de nettoyage (26, 27) pour le nettoyage interne,
b) nettoyage externe des composants (14) dans une station de nettoyage (15),
c) le nettoyage externe et le nettoyage interne a lieu dans la même station de nettoyage (15),
**caractérisé en ce que**
d) le nettoyage externe a lieu au moyen d'un robot multi-axial (20, 21), qui guide un outil de nettoyage (24, 25) pour le nettoyage externe et
e) le nettoyage interne et le nettoyage externe ont lieu sur les différents composants (14) sans que les différents composants (14) soient transportés plus loin le long du trajet de convoyage (16) entre le nettoyage interne et le nettoyage externe.

12. Procédé d'exploitation selon la revendication 11,
**caractérisé en ce que**
a) le nettoyage externe et le nettoyage interne ont lieu dans la même cabine de nettoyage (15) et/ou
b) le nettoyage interne est d'abord effectué puis le nettoyage externe est effectué.

13. Procédé d'exploitation selon l'une des revendications 11 à 12, **caractérisé par** les étapes suivantes dans cet ordre :
a) positionnement de robots pour le nettoyage externe (20, 21) dans une position de stationnement côté sortie dans la station de nettoyage (15),
b) réalisation du nettoyage interne avec des robots pour le nettoyage interne (22, 23) tandis que les robots pour le nettoyage externe (20, 21) se trouvent dans leur position de stationnement,
c) positionnement des robots pour le nettoyage interne (22, 23) dans une position de stationnement côté entrée dans la station de nettoyage (15),
d) réalisation du nettoyage externe avec les robots pour le nettoyage externe (20, 21) tandis que les robots pour le nettoyage interne (22, 23) se trouvent dans leur position de stationnement côté entrée,
e) peinture des composants (14) après le nettoyage externe et le nettoyage interne.

14. Procédé d'exploitation selon l'une des revendications 11 à 13, **caractérisé en ce que**, dans la cabine de nettoyage commune (15) pour le nettoyage interne et le nettoyage externe, n'est disposée, en plus du dispositif de nettoyage interne (22, 23, 26, 27) et du dispositif de nettoyage externe (20, 21, 24, 25), aucun autre dispositif de nettoyage ni aucun dispositif de revêtement.
